Europäisches Patentamt

(19) European Patent Office    (11) Publication number:    **0 025 025**

Office européen des brevets    **A2**

(12)    # EUROPEAN PATENT APPLICATION

(21) Application number: **80850128.2**    (51) Int. Cl.³: **B 60 K 31/00**

(22) Date of filing: **03.09.80**

(30) Priority: **04.09.79 SE 7907358**

(43) Date of publication of application:
**11.03.81 Bulletin 81/10**

(84) Designated Contracting States:
**AT BE CH DE FR GB IT LI NL**

(71) Applicant: **Jonasson, Hans**
**Rubinvägen 29**
**S-852 40 Sundsvall(SE)**

(71) Applicant: **Sundberg, Bo**
**Kvarnzeliusgatan 9**
**S-852 40 Sundsvall(SE)**

(72) Inventor: **Jonasson, Hans**
**Rubinvägen 29**
**S-852 40 Sundsvall(SE)**

(72) Inventor: **Sundberg, Bo**
**Kvarnzeliusgatan 9**
**S-852 40 Sundsvall(SE)**

(74) Representative: **Lindblom, Erik J**
**Caroline Östbergs väg 5**
**S-122 35 Enskede(SE)**

(54) **Controlling device cooperating with an engine braking means in a Diesel motor.**

(57) A control circuit for co-action with a vehicle-engine speed control system intended for diesel motors, and in particular such a system which includes a relay (2) which when energized activates means for throttling the supply of fuel to the engine of said vehicle and/or cuts-off the discharge of exhaust gases therefrom. At a vehicle speed equal to or exceeding the given speed (70 kg/hour) there is produced, via means (3) an input signal (3a) which is applied to a control circuit (1), through which said signal, although only when other input signals (4a, 5a) applied to said control circuit (1) indicate a state of acceptance for the activation of the relay (2), activates means (18) incorporated in the control circuit (1) for generating a signal (2a) which activates the vehicle-speed control system, or relay (2).

Fig. 1

- 1 -

## TITLE.
see front page

TECHNICAL FIELD

The present invention relates to a control circuit incorporated in an engine-speed control means for diesel engines. The invention can be applied to advantage in such engine-speed regulating means as those which include an electrically activateable relay which when energized actuates means associated with said diesel engine, to decrease the supply of fuel thereto and/or to cut off the ejection of exhaust gases therefrom. Thus, the invention can be applied to any kind of diesel engine whose engine speed can be retarded simply by throttling the supply of fuel to said engine or by choking the exhaust gases, or both.

BACKGROUND ART

Means for automatically maintaining the speed of a motor vehicle constant, and in particular the speed of petrol driven vehicles, are known to the art. The control circuits used to achieve this constant speed-holding effect are designed to increase or decrease the supply of fuel to the engine in correspondence to the difference between the actual engine speed and a set point value. These control circuits are normally of very complicated design. Because of this it has only been possible to install such control systems in the more exclusive type of petrol driven vehicles.

It is also known in diesel driven vehicles to incorporate vehicle-speed control systems which include an electrically activated relay, which when energized activates means for throttling the flow of fuel to the engine and/or cuts off the discharge of exhaust gases.

The vehicle-speed control means in such diesel engines, which although most normally found in long-distance transport vehicles, are also found in small lorries or trucks, is normally operated manually by the driver, by means of a foot pedal or foot-operated switch. When the pedal or switch, i.e. the foot-contact, is operated a current path to the relay is closed, whereupon means are activated to throttle the supply of fuel to the engine and to shut off the discharge of exhaust gases.

One advantage with a vehicle-speed control system of the aforedescribed kind is that it can be used to an ever widening extent without causing damage to the engine of said vehicle or shortening the useful life of said engine. By using such vehicle-speed control means adroitly, it is also possible to hold the speed of the vehicle relatively constant, e.g. when driving downhill, without needing to apply the wheel brakes of the vehicle, thereby avoiding unnecessary wear on the various components of the vehicle braking system, e.g. the brake shoes. Adroit use of such vehicle-speed control systems has also been found to reduce the wear on tyres and the wheel components of vehicles.

DESCRIPTION OF THE INVENTION

TECHNICAL PROBLEMS

There has long been a desire to provide long-distance haulage vehicles, or so-called tandem transport vehicles, with vehicle-speed governors which operate fully automatically, i.e. which hold the speed of the vehicle constant irrespective of the vehicle load or the road gradient. The design of such control systems has been found too complicated, however, and thus too expensive. In addition, an automatically acting speed governor for long-distance haulage vehicles will increase their fuel consumption. Further, the provision of a control circuit, or governor, for maintaining a constant vehicle speed may have a negative psychological effect on the driver, since he does not play an active part in controlling the speed of the vehicle and adjusts its speed according to prevailing circumstances.

In view of the high cost of fuel, strenuous attempts have been made to reduce the fuel consumption of transport vehicles, and in particular of long-distance transport vehicles, although this has hitherto been found difficult to achieve. One reason for this would seem to be the difficulties encountered in adjusting fuel consumption to prevailing traffic situations and in keeping speed variations within economic limits. One important reason for such difficulties is that an automatic braking effect cannot be readily achieved at the maximum speed limit or speeds thereabove.

Practical tests have shown that a reduction in speed from 90 km/hour to 80 km/hour will afford a saving in fuel of up to perhaps half a litre of diesel oil for each 10 kilometres travel. As is well known, rapid acceleration requires more fuel.

It is well known, that long-distance haulage vehicles with single or double trailers connected thereto are driven by diesel engines, which are provided with vehicle-speed control systems, or speed governors, whose function is, in general, to cut off the supply of fuel to the engine while, at the same time, stopping the discharge of exhaust gases. This is effected via an engine-power output reduction relay which, when necessary, is operated by the driver through a foot pedal. This vehicle-speed control system is operative such as to enable wear on the conventional wheel-braking system of the vehicle to be reduced. It has been found, however, that the foot operated pedal is not always in a location which can be readily reached by the driver.

Because of the many deficiencies of existing vehicle-speed control systems the potentialities of such systems

4

has not been used to the full.

The instability of such systems and the doubt as to their reliability has led to the desire for a fully automatic vehicle-speed control system which comes into operation immediately the vehicle speed is equal to or exceeds a given value.

## DESCRIPTION OF THE INVENTION

The aforementioned problems are solved by means of the invention, by providing means which when the speed of a vehicle is equal to or exceeds a given speed produces a first input signal which is applied to the vehicle-speed control means, i.e. the control circuit controlling said means, and which produces an activating signal which is applied to the said vehicle-speed control means.

An essential feature of the present invention is that a second input signal is allotted a higher priority than the input signal appertaining to the maximum speed limit of the vehicle and that said second input signal may only appear for a given duration of time, preferably a time of about 60 secs., after which period said second input signal loses its priority. It will be understood that the means for producing this second signal may have any position within reasonable reach of the driver of the vehicle concerned.

## ADVANTAGES AFFORDED BY THE INVENTION

A vehicle-speed control circuit designed in accordance with the invention affords many advantages, of which a few are mentioned herebelow.

A driver of a vehicle equipped with a vehicle-speed control circuit according to the invention is able to manually adjust the speed of the vehicle so that the control circuit is never in normal circumstances activated; and neither shall it be so if the driver pays particular attention to driving conditions and to surrounding circumstances. As will be understood, the driver is aware of the fact that if he or she increases the speed of the vehicle to a level above a predetermined value, the control circuit will automatically activate the vehicle-speed control system. This knowledge enables the driver to be more relaxed when driving, and to concentrate more on the surrounding traffic situations and less on the speed at which he or she is driving, since he or she has an automatically acting engine brake which comes into effect as soon as said given speed is exceeded.

The driver is also conscious of the fact that if it is necessary to drive at a speed higher than the given value, for example in preparing to meet a steep hill or climb, he or she is able to operate by hand a switch through which said second signal of higher priority than said first signal, recognized from the speedometer, can be applied to the control circuit, so as to de-activate the vehicle-speed control system over said limited period of time. Although this period of de-activation may be of any desired duration, it is preferably in the order of 60 secs. It can be mentioned in this connection that a vehicle travelling at 70 km/hour will travel more than one kilometre in 60 secs.

The present invention also makes the provision whereby a switch may be coupled to and activated by a foot pedal, said switch being arranged to generate a signal having the same priority as said second input signal produced by the hand-operated switch.

The control circuit according to the present invention is also so designed that the previously known and utilized manually activated vehicle-speed control device can still be used and has priority over the signal from the control circuit and is not disturbed by the output signal of said circuit.

By utilizing a control circuit according to the present invention the driver is much more able to maintain a uniform speed corresponding to a low fuel consumption, since he is aware of the fact that a highest speed cannot be exceeded, since if the vehicle does exceed said highest permitted speed the control circuit is automatically activated and the vehicle speed decreased as a result thereof. Moreover, the driver is aware that the vehicle-speed control mechanism can be de-activated by him at wish, i.e. when driving situations require such measures to be taken.

As is well known, a lower fuel consumption does not only save energy but is also highly beneficial to the environment.

It has also been shown that a relatively uniform vehicle speed also reduces the amount of lubricants required, and practical tests have shown that a reduction in speed of 10 km/hour (at 90 km/hour) reduces the consumption of lubricant oil by about 5%.

It is also known that a uniform speed, and a low speed, reduces the wear on roads and tyres. A particular advantage afforded by the present invention is a considerable reduction on the wear of brake shoes, since the vehicle-speed control system according to the invention enables the speed of the vehicle to be maintained relatively constant when travelling down steep hills, without necessitating the use of wheel-brakes.

The main features characteristic of a control circuit according to the present invention are set forth in the characterizing clause of the accompanying claim 1.

BRIEF DESCRIPTION OF THE DRAWING

A preferred embodiment of the invention will now be described with reference to the accompanying drawing, in which

Figure 1    is an electrical block schematic of a control circuit according to the invention, and illustrating schematically the vehicle components necessary to illustrate the invention,

Figure 2    illustrates a first part of a circuit
            diagram of said control circuit,

Figure 3    illustrates a second part of said circuit
            diagram of said control circuit,

Figure 4    illustrates a third part of said circuit
            diagram of said control circuit, and

Figure 5,   which comprises two views designated 5a
            and 5b, respectively, illustrates a card
            taken at random (Figure 5a) from a vehicle
            not provided with a control circuit according to the invention, and a card (Figure
            5b) taken from a vehicle provided with a
            control circuit according to the invention.

BEST MODE OF PUTTING THE INVENTION INTO EFFECT

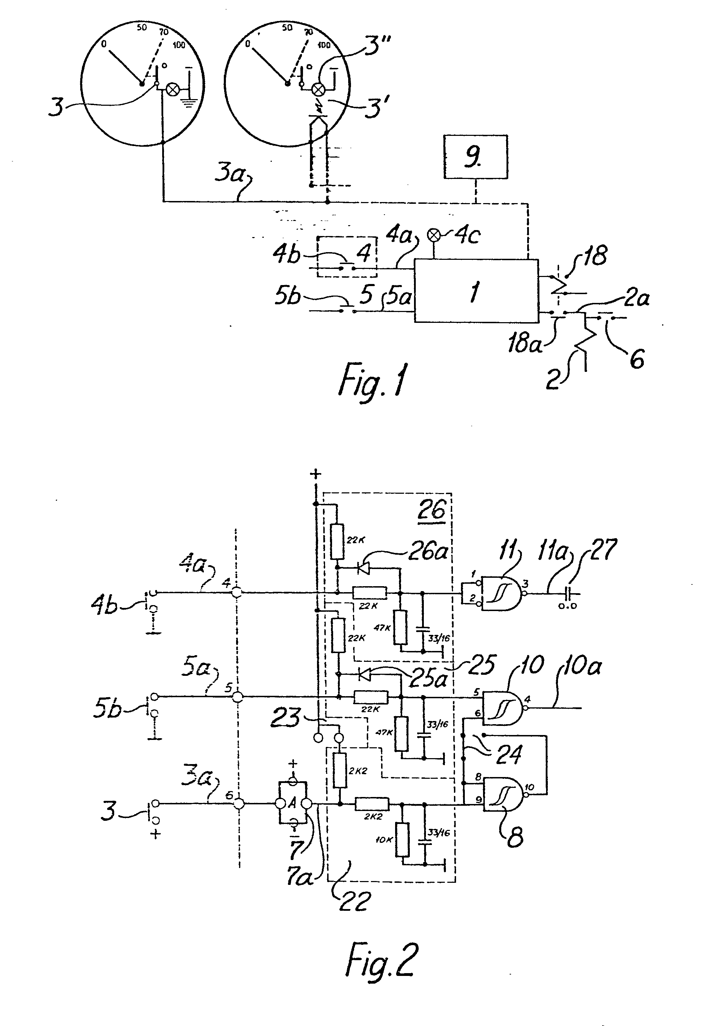

In Figure 1 there is shown a circuit diagram, i.a.
including a control circuit according to the invention.
As will be seen from Figure 1, the control circuit 1 is
intended to co-act with a vehicle-speed system intended
for diesel engines. The invention is intended to control
a vehicle-speed control system including a relay 2 which
when energized activates means for throttling the supply
of fuel to the engine and cutting-off the discharge of
exhaust gases. It will be understood that the present invention can also be applied when the relay is intended
solely to throttle the supply of fuel to said engine or
solely to cut off said exhaust gas discharge, in both
cases to cause the speed of the engine to be reduced.
The control circuit 1 is coupled to means 3 intended to
generate a first input signal which is applied to said
control circuit 1 when the speed of the vehicle is equal
to or exceeds a given speed, in the present case a speed
of 70 km/hour. This signal appears on a conductor 3a and
is hereinafter referred to as the first input signal. This
input signal activates in the control circuit 1 a means
incorporated therein such that said control circuit is
able to generate an activating signal on a conductor 2a, such as to activate a relay 2 associated with said vehicle-speed controlling system.

Since those components belonging to the vehicle-speed control system are previously known, no detailed description thereof will be given. Other components of the vehicle which are previously known will not be described, since the function and construction of said components are wellknown to those skilled in this art.

In addition to the aforementioned "first" signal the control circuit according to the invention is arranged to accept further signals, for example on lines 4a and 5a. The signals on said lines 4a and 5a are hereinafter designated "second" input signals and are allotted a higher priority than the input signal arriving on line 3a. (The signals 4a and 5a can be considered as inhibiting signals with respect to the signal 3a.) In other words, when the second input signals appear on lines 4a and 5a and are fed to the control circuit 1, with a signal on the line 3a, the signals 4a and 5a cause the vehicle-speed control system to be de-activated.

The line 4a is coupled to a switch 4b incorporated in a hand-operated switching device 4 and by actuating said switch 4b the vehicle-speed control system 1, if the first signal on the line 3a requires activation of the vehicle-speed control system relay 2 will block the effect of the first signal, as a result of the allotted higher priority of the second signal, so that the vehicle-speed control system is de-activated over a given period of time, in the illustrated example shown by a counter set at 60 secs.; although it will be understood that the duration of said time can be arbitrary. It is essential, however, that as soon as this delay time has passed the first signal appearing on line 3a (if it is there) automatically affects the control circuit 1 in the aforedescribed manner so as to activate the vehicle-speed control system. The switch or contact has been referenced 4b and an indicating lamp has been referenced 4c, said lamp being there to show whether a knob 4b has been manipulated or not. It can be mentioned that the knob 4b need only be manipulated over a short period of time in order to start the time circuit (60 secs.).

As will be seen from Figure 1 the control circuit incorporates a pedal 5 through which a switch or contact 5b can be activated, in a manner such that as the pedal is pressed downwardly said switch 5b initiates the transmission of a second input signal. This signal has a priority equal to the priority of the signal activated by the switch 4b, although the activation of this switch is not time-dependent.

The known foot-switch for activating the vehicle--speed control system relay 2 is illustrated in Figure 1 by the reference 6.

As will be seen from Figure 1, the first input signal to the control circuit 1 is obtained via a switch 3 incorporated in a speedometer, which is arranged to adopt a given, preferably closed, position as soon as said speedometer registers a speed equal to or exceeding a given value, for example 70 km/hour.

However, it has been shown that access to said switch 3 can only be effected by engagement with the speedometer, although the present invention illustrates, by reference 3', that information regarding an exceeded speed limit can be obtained via an optoswitch, containing a photo transistor placed in the proximity of a warning lamp 3", and in this way an identical signal on the line 3a can occur irrespective of whether the line 3a leads directly to the switch or whether an optoswitch is used. In the latter case the input signal to the control circuit 1 is generated by a photo transistor, which is placed on the protective glass immediately adjacent a warning lamp connected to the speedometer (and optionally also to the driving card writer). This warning lamp 3" is arranged to illuminate as soon as the speed is equal to or exceeds a given set value.

In Figure 2 there is illustrated a first part of a circuit diagram of the control circuit 1. As will be seen from Figure 2, the line 3a is connected to an input module 7. The input module 7 comprises an electronic circuit so constructed that in dependence upon the type of vehicle in which the system is installed and in dependence upon the transducer system, the signal on the line 3a is converted in a manner such as to control a Schmitt-trigger circuit 8 via a delay circuit 22.

It has previously been mentioned that signals can occur on the line 3a which are obtained from a mechanical switch 3 on the speedometer or an optoswitch 3', 3" on said speedometer, although the present invention can through said input module 7 also utilize inductive transducers connected to a tachogenerator referenced 9 in Figure 1 and being dependent on the speed of the vehicle. Thus, the input module 7 is intended to comprise a replaceable unit, the design of said unit being dependent upon the character of the expected signal on line 3a.

Connected to the module unit 7 are strap connections or U-links 23 and 24 serving as programming points.

When the signal 3a originates from the mechanical contact or swith 3, the module unit 7 is activated without requiring a supply of current thereto.

When the signal 3a originates from said optoswitch 3', said switch applies a minus signal on the line 3a, which requires the strap connection 23 to be coupled in and to provide a plus potential to the line 7a.

When the signal 3a is produced by an a.c. signal corresponding to the speed of the vehicle, for example from an existing tachogenerator, the input module 7 must contain frequency sensing means and be arranged to apply an output signal on the line 7a as soon as the frequency exceeds a value corresponding to a maximum speed.

It is also possible to sense the speed of the
vehicle inductably and/or magnetically, for example by
detecting the speed of rotation of the drive shaft of the
vehicle through a sensing coil arrangement, or by causing
a fixed permanent magnet to pass by a Reed-contact.

It is also possible to detect the engine speed and
to multiply said speed with a value corresponding to the
conversion factor for the gear in which the vehicle is
being driven.

Signals on line 5a are arranged to control a Schmitt-
trigger 10 via a delay circuit 25. The delay circuit 25
includes a diode 25a arranged to rapidly activate the
Schmitt-trigger 10, while de-activation is effected with
a time delay.

Signals on line 4a are arranged to control a Schmitt-
trigger 11 via a delay circuit 26. A diode 26a incorporated in the delay circuit 26 is arranged to rapidly activate the Schmitt-trigger 11, while de-activation takes place
with a time delay (one or more seconds).

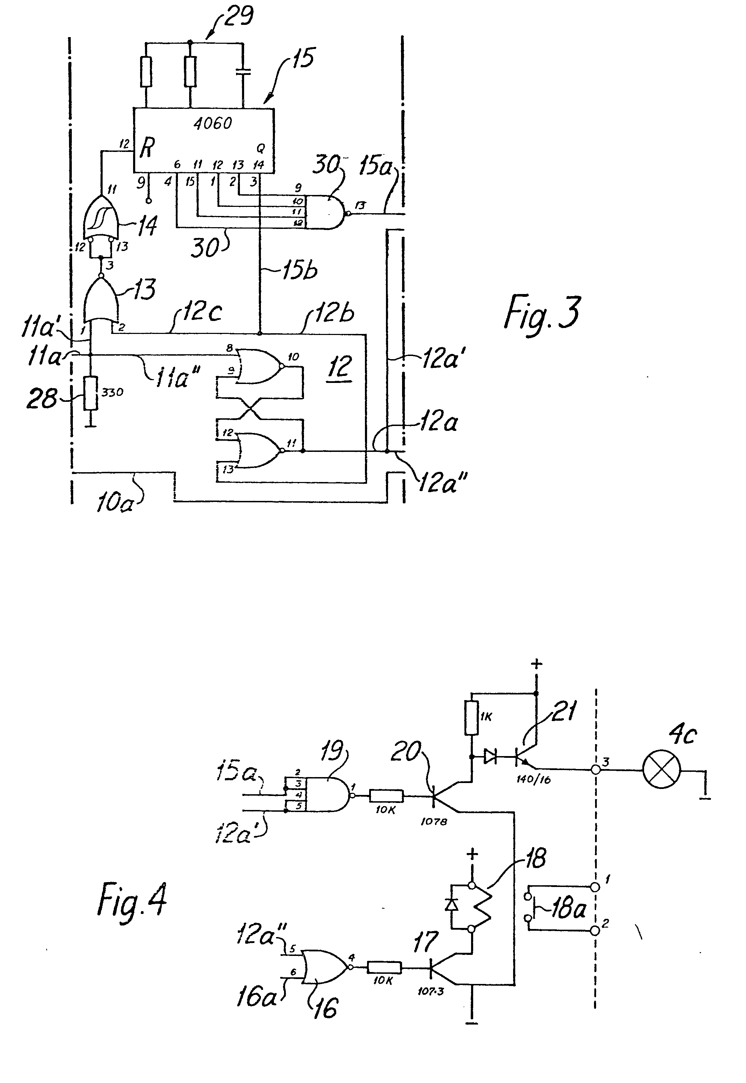

As beforementioned, the line 4a is connected to a
contact 4b incorporated in a hand-operated coupling means,
and by activating said contact and the signal on line 4a
to the means 1 said signal is supplied, via the Schmitt-
trigger 11, to a flip-flop, shown in Figure 3, and to a
counter via an inverted OR-circuit (NOR) 13 and a Schmitt-
trigger 14. The counter is referenced 15 and comprises a
unit designated 4060.

Signals from the Schmitt-trigger 11 on line 11a pass
a capacitor 27, which together with a resistance 28 forms
a derivating circuit.

The signal on line 11a' then has the form of a pulse
which occurs each time the contact 4b is activated.
(Constant activation of the contact 4b provides no pulse.)

The counter 15 begins to count at each pulse.

The pulse on the line 11a' passes the NOR-gate 13
and an inverted OR-gate (NAND) 14 (in the example a Schmitt-trigger) to the input R of the counter 15, so as to set the counter to 0 and to start said counter.

Pulses on line 11a are also sent to a flip-flop 12 via a line 11a" to change the state of said flip-flop.

The output line 12a of the flip-flop is coupled to a NAND-gate 19 via a line 12a' and to a NAND-gate 16 via a line 12a".

The counter 15 comprises an oscillator circuit and a 14-bit counter. The oscillator circuit is referenced 29.

The outputs of the counter are connected to a NAND--gate 30 whose output is connected to a line 15a connected to the NAND-gate 19.

It will be seen from the aforegoing that signals 3a are coupled to the Schmitt-trigger 10 which generates an output signal on line 10a via an inverted amplifier coupling 17. The relay 18 is arranged to activate the vehicle--speed control system via a contact 18a.

Should a signal from contact 5b be present on the Schmitt-trigger 10 the activating signals 3a are blocked and the vehicle-speed control system is de-activated.

Should an activating signal be present on line 10a, said signal can be inhibited in the gate 16 by a signal on line 4a and 12a".

The counter 15 is also arranged to activate a NAND--gate 19 via a line 15a, the output signal of said NAND--gate being applied to an indicating lamp 4c via a transistor 20 and a transistor 21.

The counter 15 is designed to cause a constant current to be applied to lamp 4c over a given period of time, for example 55 seconds, and to apply to said lamp an intermittent current over a further time period, for example 5 seconds, so as to cause said lamp 4c to flash on and off. The flashing light is generated by an output on the counter (line 30).

When the time period set in the counter 15 terminates, there is applied to the line 15b a signal which resets the flip-flop 12 to its original state via a line 12b, and which re-sets the counter 15 to 0 via a line 12c and the gate 13.

It will be seen from the aforedescribed circuit diagram that the signal 4a has exclusive priority and thus causes the automatic vehicle-speed control system to be disconnected when said system is in an active state as result of a signal generated in said circuit on line 3a. The signal on line 5a has a priority exceeding that of the signal on line 3a, since when the signal 5a is applied to the Schmitt-trigger 10 said trigger will block the signal 3a from passing, via line 10a, to the NAND-gate 16, whose output is able to activate the relay 18 via the inverted transistor coupling 17.

To avoid the engine stalling when the vehicle-speed control system is activated, the aforementioned pedal has been provided with said contact or switch 5b, which at the least movement of said pedal provides the same function as that when the press button 4b is moved. One difference, however, is that when the button 4b is moved the speed control system is disconnected over a given period of time, while movement of the switch 4b provides only a momentary de-activation of the control system.

A button 6 which overrides the automatic function of the speed control system is provided, so as to enable said system to be activated manually.

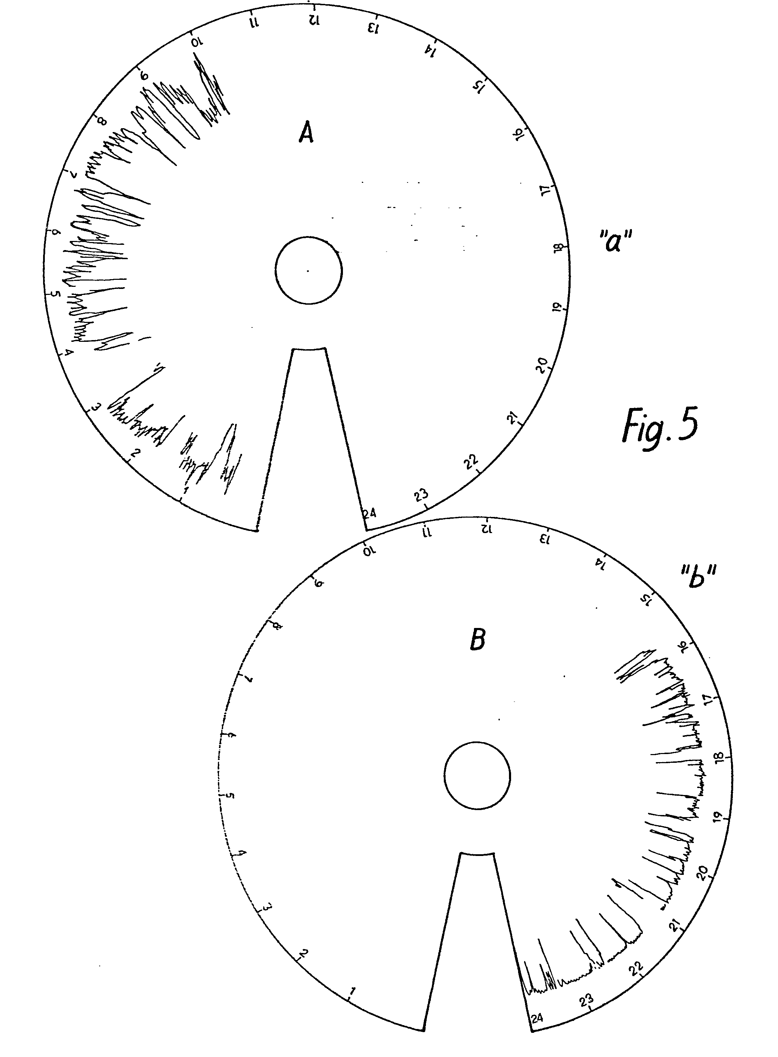

Illustrated in Figure 5 are two mutually different journey record cards. The card shown in Figure 5a has been taken at random from a vehicle which was not provided with the speed control circuit according to the invention, while Figure 5b shows a card taken from a vehicle which was provided with a control circuit according to the invention.

A comparison between these cards shows that the speed of the vehicle provided with the control circuit according to the invention is more uniform than that of the vehicle

14

which was not fitted with said circuit.

It will be understood that the invention is not restricted to the exemplary embodiment described, but can be modified within the scope of the following claims.

Because voltage stabilisation (not shown in the Figure) does not act on the relay 18, the system can be used with both 12 and 24 volts.

Claims

1. A control circuit for co-operation with a vehicle-
-speed control system intended for a diesel engine, particularly an engine-speed control system which incorporates
a relay (2), which when energized activates means for
throttling the flow of fuel to said engine and/or cuts-off
the discharge of exhaust gas, c h a r a c t e r i z e d
in that when the speed at which the vehicle travels is
equal to or exceeds a given speed there is produced, via
means (3) an input signal (3a) to said control circuit (1);
and in that said input signal (3a) only activates means
(18) incorporated in said control circuit (1) for producing
a signal (2a) which activates the relay (2) when other
input signals (4a, 5a) to the control circuit (1) indicate
a state in which activation of the engine speed control
system can be accepted.

2. A control circuit according to claim 1,
c h a r a c t e r i z e d  in that the input signal (3a)
to the control circuit (1) is obtained via a switch (3) in
the speedometer of the vehicle, said speedometer being
arranged to take a given, preferably closed position, as
soon as said meter indicates a speed equal to or exceeding
a given set value.

3. A control circuit according to claim 1,
c h a r a c t e r i z e d  in that the input signal (3a)
applied to the control circuit (1) is obtained via a photo
transistor (3') which is located in the vicinity of a
warning lamp coupled to the speedometer (and optionally
to a journey card writer) said lamp being arranged to be
illuminated as soon as the speed of the vehicle is equal
to or exceeds said given set value, and that said photo
transistor is arranged to be energized by said warning
lamp (3").

16

4. A control circuit according to claim 1, c h a r a c t e r i z e d  in that the input signal (3a) applied to the control circuit (1) is obtained from a frequency generating means (tachogenerator 9) corresponding to the speed of the vehicle, and in that an input module is arranged to convert the input signal to a signal suitable for said control circuit (1).

5. A control circuit according to claim 1, c h a r a c t e r i z e d  in that the input signal (3a) is amplified in signal-amplifying means (17) incorporated in said control circuit (1), and in that the amplified signal is arranged to activate a relay (18) in said control circuit, said relay having a contact (18a) arranged to activate the relay (2) of said vehicle-speed control circuit.

6. A control circuit according to claim 1, c h a r a c t e r i z e d  in that said other input signal (4a) is allotted a higher priority than said input signal (3a) corresponding to the vehicle speed; and in that said other signal (4a, 5a) only has a predetermined duration (60 secs.).

7. A control circuit according to claim 1, c h a r a c t e r i z e d  in that the signal (2a) for activating the vehicle-speed control system can also be generated by a circuit (6) separate from said control circuit.

8. A control circuit according to claim 1, c h a r a c t e r i z e d  in that a further input signal (5a) is produced by depressing a pedal, the duration of said signal corresponding only to the time during which the pedal is depressed.

9. A control circuit according to claim 6, c h a r a c t e r i z e d  in that said other signal (4a) is arranged to activate a binary counter (15) and a flip- -flop (12).

10. A control circuit according to claim 9, c h a r a c t e r i z e d  in that said counter is

17

arranged to activate constantly an optical means (4c) over a first long period of time, and to intermittently activate said optical means (4c) over a subsequent short period of time.

11. A control circuit according to claim 1, c h a r a c t e r i z e d  in that the input signal (3a) is arranged to be applied to a separate, removable input module (7) so as to obtain an adaptation of said input signal to said control circuit through said module.

Fig.1

Fig.2

Fig. 3

Fig. 4

0025025

Fig.5